# EUROPÄISCHE PATENTSCHRIFT

(11) **EP 4 450 386 B1**
(45) Veröffentlichungstag und Bekanntmachung des Hinweises auf die Patenterteilung: **11.11.2026**
(21) Anmeldenummer: 24161291.0
(22) Anmeldetag: 04.03.2024
(51) Int. Cl.: B64D 1/04, B64D 7/08, F41F 3/06, F42B 15/36, B64U 101/18

(54) **ANTRIEBSLOSE HILFSVORRICHTUNG UND FLUGKÖRPERSYSTEM**
UNPOWERED ASSIST DEVICE AND MISSILE SYSTEM
DISPOSITIF D'ASSISTANCE SANS PROPULSION ET SYSTÈME DE MISSILE

(30) Priorität: 19.04.2023 DE 102023001553
(43) Veröffentlichungstag der Anmeldung: 23.10.2024
(73) Patentinhaber: MBDA Deutschland GmbH, 86529 Schrobenhausen (DE)
(72) Erfinder: GILCH, Joachim, 82178 Puchheim (DE); ENGEL, Jürgen, 82178 Puchheim (DE); MAHL, Martin, 86529 Schrobenhausen (DE)
(74) Vertreter: Isarpatent

(56) Entgegenhaltungen:
- CN-A- 108 423 180
- US-A- 2 992 794
- US-A- 5 141 175
- US-A1- 2005 116 110
- US-A1- 2011 024 548

## Beschreibung

### TECHNISCHES GEBIET DER ERFINDUNG

Die vorliegende Erfindung betrifft eine antriebslose Hilfsvorrichtung sowie ein Flugkörpersystem.

### HINTERGRUND DER ERFINDUNG

Die Verwendung von Luftfahrzeugen ermöglicht das rasche Transportieren von Geräten, wie Effektoren und Sensoren, auch an entlegenen Orten und unabhängig von der dort vorhandenen Infrastruktur, was beispielsweise bei militärischen Anwendungen einen großen Vorteil bringt.

Der Einsatz von unbemannten Flugkörpern ermöglicht einen zeitgleichen Einsatz einer großen Anzahl von Effektoren bzw. Sensoren, ohne eine Besatzung zu benötigen, welche bei einem Einsatz eventuell gefährdet werden könnte. Diese unbemannten Flugkörper sind meistens für spezifische Anwendungsfälle konzipiert und werden in großer Stückzahl gefertigt.

Um vorhandene unbemannte Flugkörper an weitere Missionsparameter anzupassen, kommen bisweilen Hilfsvorrichtungen zum Einsatz, welche die Flugkörper mit ihren eigenen aerodynamischen Eigenschaften unterstützen. Die bisher bekannten Hilfsvorrichtungen sind jedoch zumeist eher komplex gestaltet, was bedeutet, dass ihre Produktion im Vergleich zu den Flugkörpern aufwendig und kostenintensiv ist.

Die Druckschrift US 2005/116110 A1 beschreibt ein System zum Starten eines Flugkörpers mit einem mit dem Flugkörper gekoppelten Flugkörperträger und einem mit dem Flugkörperträger gekoppelten klappbaren Steuerflächenmechanismus, wobei der Flugkörperträger von dem Flugkörper entkoppelt wird, wenn sich der Flugkörper und der Flugkörperträger in einer vorgegebenen Ausrichtung befinden.

Die Druckschrift US 5 141 175 A beschreibt eine Vorrichtung mit ausklappbaren Flügeln und einem Lenk- und Steuersystem, welches abnehmbar an einem Flugkörper angebracht wird und dazu dient, die Reichweitenfähigkeit des Flugkörpers zu erhöhen.

Die Druckschrift US 2011/024548 A1 beschreibt ein Flugobjekt, das in der Luft abgeworfen werden kann, und abnehmbar an einem Flügelkörper eines Abschussgeräts angebracht ist.

Die Druckschrift US 2 992 794 A beschreibt einen Lenkflugkörper, bei dem eine Flügelstruktur, eine Bugvorrichtung sowie ein Leitwerk mit einem Triebwerk lösbar an einem Nutzlastkörper befestigt und während des Fluges abgeworfen werden können, wobei ein in den Flügeln angeordneter Tank das Triebwerk mit Treibstoff versorgt.

### ZUSAMMENFASSUNG DER ERFINDUNG

Dementsprechend ist es eine Aufgabe der vorliegenden Erfindung, eine Möglichkeit bereitzustellen, die Verwendungsmöglichkeiten eines Flugkörpers kostengünstig zu erweitern.

Die vorliegende Aufgabe wird gelöst durch eine antriebslose Hilfsvorrichtung mit den Merkmalen des Patentanspruchs 1 sowie durch ein Flugkörpersystem mit den Merkmalen des Patentanspruchs 6.

Nach einem ersten Aspekt der vorliegenden Erfindung ist eine antriebslose Hilfsvorrichtung für mindestens einen Flugkörper vorgesehen. Die antriebslose Hilfsvorrichtung weist eine Flügelstruktur und eine Halteeinrichtung, welche dazu ausgebildet ist, die antriebslose Hilfsvorrichtung und den mindestens einen Flugkörper zu verbinden, auf. Die Halteeinrichtung weist einen Separationsmechanismus auf, welcher dazu ausgebildet ist, die Verbindung zwischen der antriebslosen Hilfsvorrichtung und dem mindestens einen Flugkörper während eines Betriebs des mindestens einen Flugkörpers zu lösen. Die antriebslose Hilfsvorrichtung weist weiterhin einen Tank auf, welcher dazu ausgebildet ist, den mindestens einen Flugkörper mit Treibstoff zu versorgen. Der Tank ist als Bestandteil der Halteeinrichtung ausgebildet.

Hierdurch kann die Missionsreichweite des Flugkörpers vorteilhaft erhöht werden. Nach einem weiteren Aspekt der vorliegenden Erfindung ist ein Flugkörpersystem mit mindestens einem Flugkörper und einer erfindungsgemäßen antriebslosen Hilfsvorrichtung vorgesehen.

Es ist eine Idee der vorliegenden Erfindung, die Hilfsvorrichtung für den mindestens einen Flugkörper auf das absolut notwendigste zu reduzieren. Insbesondere der Verzicht auf eine separate Antriebsvorrichtung für die Hilfsvorrichtung ermöglicht eine kostengünstige und schnelle Produktion von erfindungsgemäßen Hilfsvorrichtungen mit welcher sich rapide ändernde Missionsparameter rasch erfüllt werden können. Dies ist insbesondere von Vorteil, da die Hilfsvorrichtung nach Lösung des letzten Flugkörpers ebenfalls verloren geht und daher möglichst kostengünstig ausgebildet sein sollte.

Gemäß einem Ausführungsbeispiel der antriebslosen Hilfsvorrichtung weist die Flügelstruktur mindestens ein aktives Steuerelement auf. Hierdurch kann die Manövrierfähigkeit der Hilfsvorrichtung vorteilhaft verbessert werden.

Gemäß einer Weiterbildung weist die antriebslose Hilfsvorrichtung weiterhin eine Steuereinrichtung auf, welche dazu ausgebildet ist, das mindestens eine aktive Steuerelement zu steuern. Hierdurch kann die Manövrierfähigkeit der Hilfsvorrichtung vorteilhaft verbessert werden.

Gemäß einer Weiterbildung der antriebslosen Hilfsvorrichtung ist die Steuereinrichtung dazu ausgebildet, Daten von dem mindestens einen Flugkörper zu erhalten. Die Verwendung von Daten von den Flugkörpern zur Steuerung erlaubt eine vorteilhaft kostengünstige Ausgestaltung der Hilfsvorrichtung.

Gemäß der Erfindung ist der Tank als Bestandteil der Halteeinrichtung ausgebildet. Dies erlaubt eine vorteilhaft kompakte Ausgestaltung der Hilfsvorrichtung.

Gemäß einem Ausführungsbeispiel weist die antriebslose Hilfsvorrichtung weiterhin ein Fahrgestell auf. Hierdurch ergeben sich vorteilhaft simple Start- bzw. Landebedingungen für die Hilfsvorrichtung.

Gemäß einem Ausführungsbeispiel des Flugkörpersystems weist der mindestens eine Flugkörper eine Steuereinrichtung auf, welche dazu ausgebildet ist, Steuersignale an die antriebslose Hilfsvorrichtung zu übermitteln. Die Verwendung von Daten von den Flugkörpern zur Steuerung erlaubt eine vorteilhaft kostengünstige Ausgestaltung der Hilfsvorrichtung.

Gemäß einem Ausführungsbeispiel des Flugkörpersystems weist der mindestens eine Flugkörper mindestens eine Sensoreinrichtung auf, welche dazu ausgebildet ist, Sensordaten an die antriebslose Hilfsvorrichtung zu übermitteln. Die Verwendung von Daten von den Flugkörpern zur Steuerung erlaubt eine vorteilhaft kostengünstige Ausgestaltung der Hilfsvorrichtung.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Querschnittsansicht einer antriebslosen Hilfsvorrichtung gemäß eines nicht erfindungsgemäßen Ausführungsbeispiels; und
- Fig. 2: eine schematische Querschnittsansicht eines Flugkörpersystems gemäß eines Ausführungsbeispiels der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

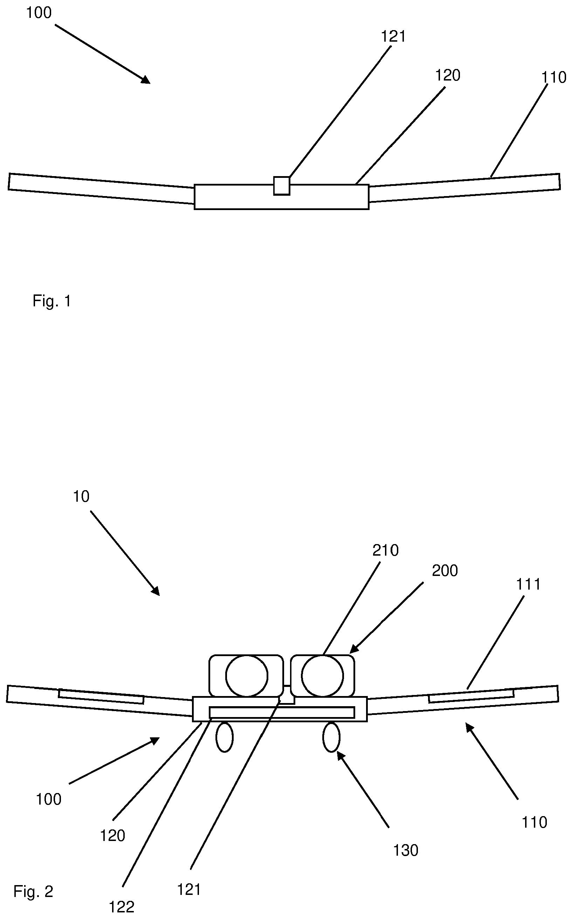

Fig. 1 zeigt eine schematische Querschnittsansicht einer antriebslosen Hilfsvorrichtung 100 gemäß eines nicht erfindungsgemäßen Ausführungsbeispiels.

Die antriebslose Hilfsvorrichtung 100 weist eine Flügelstruktur 110 und eine Halteeinrichtung 120 auf. Die Halteeinrichtung 120 weist einen Separationsmechanismus 121 auf. Die Flügelstruktur 110 umfasst zwei Flügel, welche jeweils mit der Halteeinrichtung 120 verbunden sind.

Die Halteeinrichtung 120 ist dazu ausgebildet, die antriebslose Hilfsvorrichtung 100 und mindestens einen Flugkörper zu verbinden. In Fig. 1 ist nicht explizit gezeigt, wie diese Verbindung realisiert wird, da es hierfür eine Vielzahl an Möglichkeiten gibt, welche je nach Flugkörper und weiteren Parametern eigene Vorteile bilden. Als Beispiele seien hier Klemmverbindungen, Halteklammern oder magnetische Verbindungen genannt.

Der Separationsmechanismus 121 ist dazu ausgebildet, die Verbindung zwischen der antriebslosen Hilfsvorrichtung 100 und dem mindestens einen Flugkörper während eines Betriebs des mindestens einen Flugkörpers 100 zu lösen. Die genaue Ausgestaltung des Separationsmechanismus 121 hängt hierbei davon ab, wie die Halteeinrichtung 120 mit dem Flugkörper verbunden ist. Es können beispielsweise mechanische Aktuatoren, anderweitige elektromechanische Mechanismen, oder kleine Sprengkörper zum Einsatz kommen.

Fig. 2 zeigt eine schematische Querschnittsansicht eines Flugkörpersystems 10 gemäß eines Ausführungsbeispiels der vorliegenden Erfindung.

Das Flugkörpersystem 10 umfasst eine antriebslose Hilfsvorrichtung 100 sowie zwei Flugkörper 200. Die antriebslose Hilfsvorrichtung 100 ist im Wesentlichen ausgebildet wie in Fig. 1 gezeigt, und weist darüber hinaus einen Tank 122 sowie ein Fahrgestell 130 auf. Die Flügelstruktur 110 der antriebslosen Hilfsvorrichtung 100 weist zwei aktive Steuerelemente 111 auf. Die beiden Flugkörper 200 weisen jeweils eine Antriebseinrichtung 210 auf.

Das Flugkörpersystem 10 wird allein durch die Antriebseinrichtungen 210 der Flugkörper 200 angetrieben. Der Tank 122 der antriebslosen Hilfsvorrichtung 100 ist als Bestandteil der Halteeinrichtung 120 ausgebildet und dazu ausgebildet, die zwei Flugkörper 200 mit Treibstoff zu versorgen. Hierdurch kann die Reichweite der Flugkörper 200 gegenüber einer Verwendung ohne die antriebslose Hilfsvorrichtung 100 erhöht werden.

Das Fahrgestell 130 dient dazu, die Möglichkeiten, unter welchen das Flugkörpersystem 10 eingesetzt werden kann, zu erweitern, da keine besonderen Voraussetzungen geschaffen werden müssen, um das Flugkörpersystem 10 zu starten, außer dem Bereitstellen einer angemessen ebenen, freien Fläche. So kann das Flugkörpersystem 10 etwa von einer simplen Straße aus gestartet werden. Ebenso kann das Flugkörpersystem 10 bei einem Missionsabbruch, d.h. falls die Verbindung zwischen den Flugkörpern 200 und der antriebslosen Hilfsvorrichtung 100 nicht gelöst wurde, wieder gelandet und zu einem späteren Zeitpunkt erneut gestartet werden.

Die aktiven Steuerelemente 111 der Flügelstruktur 110 dienen der Verbesserung der Manövrierfähigkeit des Flugkörpersystems 10. Hierbei kann es sich Flügelklappen jedweder Art handeln. Es können auch Steuerruder oder ähnlicher vorgesehen sein. Hierdurch kann unter anderem ermöglicht werden, dass das Flugkörpersystem 10 stationär an einem Ort verweilen kann, bis die Flugkörper 200 zum Einsatz kommen, auch wenn die Flugkörper 200 allein hierzu nicht in der Lage wären.

Zu diesem Zweck kann die antriebslose Hilfsvorrichtung 100 weiterhin eine nicht gezeigte Steuereinrichtung aufweisen, welche dazu ausgebildet ist, die zwei aktiven Steuerelemente 111 zu steuern. Diese Steuereinrichtung kann hierfür dazu ausgebildet sein, Daten von mindestens einem der Flugkörper 200 zu erhalten. In diesem Fall können die Flugkörper 200 jeweils eine Steuereinrichtung bzw. eine Sensoreinrichtung aufweisen, welche dazu ausgebildet sind, Daten, insbesondere Steuersignale und Sensordaten an die Steuereinrichtung der antriebslosen Hilfsvorrichtung 100 zu übermitteln.

In Fig. 2 wird ein Flugkörpersystem 10 mit zwei Flugkörpern 200 gezeigt. Natürlich können auch andere Anzahlen von Flugkörpern 200 in einem erfindungsgemäßen Flugkörpersystem 200 vorgesehen sein. Insbesondere kann auch ein einzelner Flugkörper 200 vorgesehen sein.

In Fig. 2 ist ein Fahrgestell 130 mit Rädern gezeigt. Im Kontext der vorliegenden Erfindung soll der Begriff Fahrgestell jedoch nicht auf eine derartige Konstruktion beschränkt sein. Vielmehr sollte unter dem Begriff Fahrgestellt jegliche Konstruktion verstanden werden, welche einen Start und/oder eine Landung auf jeglichen denkbaren Geländearten ermöglicht. So können beispielsweise für einen Start bzw. eine Landung auf vereisten Oberflächen auch Konstruktionen, welche Kufen beinhalten vorgesehen sein.

### BEZUGSZEICHENLISTE

- 10: Flugkörpersystem
- 100: antriebslose Hilfsvorrichtung
- 110: Flügelstruktur
- 111: aktives Steuerelement
- 120: Halteeinrichtung
- 121: Separationsmechanismus
- 122: Tank
- 130: Fahrgestell
- 200: Flugkörper
- 210: Antriebsvorrichtung

## Patentansprüche

1. Antriebslose Hilfsvorrichtung (100) für mindestens einen Flugkörper (200), wobei die antriebslose Hilfsvorrichtung (100) aufweist:
eine Flügelstruktur (110); und
eine Halteeinrichtung (120), welche dazu ausgebildet ist, die antriebslose Hilfsvorrichtung (100) und den mindestens einen Flugkörper (200) zu verbinden;
wobei die Halteeinrichtung (120) einen Separationsmechanismus (121) aufweist, welcher dazu ausgebildet ist, die Verbindung zwischen der antriebslosen Hilfsvorrichtung (100) und dem mindestens einen Flugkörper (200) während eines Betriebs des mindestens einen Flugkörpers (200) zu lösen;
**dadurch gekennzeichnet, dass**
die antriebslose Hilfsvorrichtung weiterhin einen Tank (122) aufweist, welcher dazu ausgebildet ist, den mindestens einen Flugkörper (200) mit Treibstoff zu versorgen; und
dass der Tank (122) als Bestandteil der Halteeinrichtung (120) ausgebildet ist.

2. Antriebslose Hilfsvorrichtung (100) nach Anspruch 1, wobei die Flügelstruktur (110) mindestens ein aktives Steuerelement (111) aufweist.

3. Antriebslose Hilfsvorrichtung (100) nach Anspruch 2, weiterhin aufweisend eine Steuereinrichtung, welche dazu ausgebildet ist, das mindestens eine aktive Steuerelement (111) zu steuern.

4. Antriebslose Hilfsvorrichtung (100) nach Anspruch 3, wobei die Steuereinrichtung dazu ausgebildet ist, Daten von dem mindestens einen Flugkörper (200) zu erhalten.

5. Antriebslose Hilfsvorrichtung (100) nach einem der vorhergehenden Ansprüche, weiterhin aufweisend ein Fahrgestell (130).

6. Flugkörpersystem (10) mit einer antriebslosen Hilfsvorrichtung (100) nach einem der Ansprüche 1 bis 5, und mindestens einem Flugkörper (200).

7. Flugkörpersystem (10) nach Anspruch 6, wobei der mindestens eine Flugkörper (200) eine Steuereinrichtung aufweist, welche dazu ausgebildet ist, Steuersignale an die antriebslose Hilfsvorrichtung (100) zu übermitteln.

8. Flugkörpersystem (10) nach einem der Ansprüche 6 oder 7, wobei der mindestens eine Flugkörper (200) mindestens eine Sensoreinrichtung aufweist, welche dazu ausgebildet ist, Sensordaten an die antriebslose Hilfsvorrichtung (100) zu übermitteln.

## Claims

1. Unpowered assist device (100) for at least one missile (200), wherein the unpowered assist device (100) comprises:
a wing structure (110); and
a holding device (120) that is configured so as to connect the unpowered assist device (100) and the at least one missile (200);
wherein the holding device (120) comprises a separation mechanism (121) that is configured so as to release the connection between the unpowered assist device (100) and the at least one missile (200) during operation of the at least one missile (200);
**characterised in**
**that** the unpowered assist device further comprises a tank (122) that is configured so as to supply the at least one missile (200) with fuel; and in that the tank (122) is configured as a component of the holding device (120).

2. Unpowered assist device (100) according to claim 1, wherein the wing structure (110) comprises at least one active control element (111).

3. Unpowered assist device (100) according to claim 2, further comprising a control device that is configured so as to control the at least one active control element (111).

4. Unpowered assist device (100) according to claim 3, wherein the control device is configured so as to receive data from the at least one missile (200).

5. Unpowered assist device (100) according to one of the preceding claims, further comprising a landing gear (130).

6. Missile system (10) having an unpowered assist device (100) according to one of claims 1 to 5, and at least one missile (200).

7. Missile system (10) according to claim 6, wherein the at least one missile (200) comprises a control device that is configured so as to transmit control signals to the unpowered assist device (100).

8. Missile system (10) according to one of claims 6 or 7, wherein the at least one missile (200) comprises at least one sensor device that is configured so as to transmit sensor data to the unpowered assist device (100).

## Revendications

1. Dispositif d'assistance sans propulsion (100) pour au moins un missile (200), le dispositif d'assistance sans propulsion (100) présentant :
une structure d'aile (110) ; et
un moyen de retenue (120) qui est conçu pour relier le dispositif d'assistance sans propulsion (100) et l'au moins un missile (200) ;
le moyen de retenue (120) présentant un mécanisme de séparation (121) qui est conçu pour libérer la liaison entre le dispositif d'assistance sans propulsion (100) et l'au moins un missile (200) pendant le fonctionnement de l'au moins un missile (200) ;
**caractérisé en ce que**
le dispositif d'assistance sans propulsion présente en outre un réservoir (122) qui est conçu pour alimenter l'au moins un missile (200) en combustible ; et
**en ce que**
le réservoir (122) est conçu comme élément constitutif du moyen de retenue (120).

2. Dispositif d'assistance sans propulsion (100) selon la revendication 1, dans lequel la structure d'aile (110) présente au moins un élément de commande actif (111).

3. Dispositif d'assistance sans propulsion (100) selon la revendication 2, présentant en outre un moyen de commande qui est conçu pour commander l'au moins un élément de commande actif (111).

4. Dispositif d'assistance sans propulsion (100) selon la revendication 3, dans lequel le moyen de commande est conçu pour recevoir des données provenant de l'au moins un missile (200).

5. Dispositif d'assistance sans propulsion (100) selon l'une des revendications précédentes, présentant en outre un train d'atterrissage (130).

6. Système de missile (10) comportant un dispositif d'assistance sans propulsion (100) selon l'une des revendications 1 à 5, et au moins un missile (200).

7. Système de missile (10) selon la revendication 6, dans lequel l'au moins un missile (200) présente un moyen de commande qui est conçu pour transmettre des signaux de commande au dispositif d'assistance sans propulsion (100).

8. Système de missile (10) selon l'une des revendications 6 ou 7, dans lequel l'au moins un missile (200) présente au moins un moyen formant capteur qui est conçu pour transmettre des données de capteur au dispositif d'assistance sans propulsion (100).
